# EUROPÄISCHE PATENTSCHRIFT

(11) **EP 2 489 615 B1**
(45) Veröffentlichungstag und Bekanntmachung des Hinweises auf die Patenterteilung: **05.03.2014**
(21) Anmeldenummer: 11165456.2
(22) Anmeldetag: 10.05.2011
(51) Int. Cl.: B65G 47/91

(54) **Sauggreifer für unterschiedliche Objekte mit unterschiedlichen Oberflächenformen**
Suction gripper for various objects with different surfaces
Pince aspirante pour différents objets ayant différentes formes de surface

(30) Priorität: 18.02.2011 EP 11154926
(43) Veröffentlichungstag der Anmeldung: 22.08.2012
(73) Patentinhaber: Trumpf Maschinen Austria GmbH & CO. KG., 4061 Pasching (AT)
(72) Erfinder: Angerer, Gerhard, 4203 Altenberg (AT); Freudenthaler, Klemens, 4020 Linz (AT); Gaggl, Josef, 4400 Steyr (AT); Hörl, Matthias, 6372 Oberndorf/Tirol (AT); Mayrhofer, Johann, 4542 Nussbach (AT); Strasser, Hagen, 4061 Pasching (AT); Theis, Helmut, 4540 Pfarrkirchen (AT); Weiss, Thomas, 4020 Linz (AT)
(74) Vertreter: Burger, Hannes

(56) Entgegenhaltungen:
- FR-A- 1 181 030
- JP-A- 2002 018 757
- SU-A1- 1 771 958

## Beschreibung

Die Erfindung betrifft einen Sauggreifer gemäß dem Oberbegriff des Patentanspruchs 1.

In vielen Bereichen der automatisierten Fertigung sind heute Sauggreifer im Einsatz, mit denen Objekte zum Zwecke der Manipulation oder Fixierung angesaugt werden können. Derartige Sauggreifer sind, um ein zuverlässiges Ansaugen der Objekte zu gewährleisten, zumeist für eine bestimmte Art von Objekten ausgelegt. Bei verschiedenartigen anzusaugenden Objekten ist deshalb häufig ein Wechsel der Sauggreifer erforderlich.

Ein Ansatz, diesen Zeitverlust und Arbeitsaufwand verursachenden Wechsel zwischen verschiedenen Sauggreifem einzusparen, ist aus DE 299 06 611 U1 bekannt, in der ein Sauggreifer offenbart wird, mit dem auch unterschiedlich große Werkstücke ergriffen werden können. Der Sauggreifer weist dazu einen Saugkörper mit einem Saugraum auf, der mit einem Unterdruckanschluss verbunden ist und weiters ist innerhalb des Saugraumes wenigstens ein weiterer Saugraum vorgesehen, der gegenüber dem ersten Saugraum über eine Dichtung abgegrenzt ist. Der innere Saugraum, der von der inneren Dichtungslippe begrenzt wird, dient dabei zum Ergreifen von kleinen Gegenständen, bei dem die äußere Dichtlippe nicht vollständig aufliegen würde und der äußere Saugraum dient in Kombination mit dem inneren Saugraum zur Aufnahme großer Werkstücke. Ähnliche Sauggreifer sind auch aus FR 1 181 030 A oder SU 1 771 958 A1 bekannt. Das Dokument JP 2002 018757 A offenbart einen Sauggreiter gemäß dem Oberbegriff des Patentanspruchs 1.

Ein derartiger Sauggreifer ist zwar zum Ansaugen von ebenen Objektoberflächen unterschiedlicher Dimensionen geeignet, bei Objekten, die jedoch unterschiedliche, nicht nur ebene Oberflächenformen aufweisen, ist nach wie vor ein Wechsel der Sauggreifer für ebene Objektsoberflächen auf Sauggreifer für andersartige Oberflächenformen erforderlich, wodurch in diesem Fall ebenfall ein Zeitverlust und Arbeitsaufwand gegeben ist.

Die Aufgabe der Erfindung besteht darin, einen Sauggreifer bereit zu stellen, der auch zum Ansaugen von Objekten mit stark unterschiedlichen Oberflächenformen geeignet ist. Die Aufgabe der Erfindung wird durch einen Sauggreifer mit den Merkmalen des Patentanspruches 1 gelöst. Dadurch, dass an einem Saugkörper zumindest zwei an unterschiedliche Objektoberflächenformen angepasste Dichtlippen angeordnet sind, können ohne Umrüstung des Sauggreifers Objekte mit stark unterschiedlichen Objektoberflächenformen zuverlässig angesaugt werden. Die äußere Dichtlippe ist dabei an ebene Objektoberflächen angepasst, die an einer Vielzahl von Werkstücken vorhanden sind, während die zweite, innere Dichtlippe insbesondere für abgewinkelte Objektoberflächen, wie sie nach dem Abkanten von Werkstücken an einer Biegepresse vorliegen, geeignet ist. In vielen Fällen beträgt der Abkantwinkel etwa 90°, weshalb die innere Dichtlippe vorzugsweise so geformt ist, dass sie zum Ansaugen von rechtwinkelig geformten Objektoberflächenbereichen geeignet ist.

Die Anpassung einer Dichtlippe des Saugkörpers an eine Objektoberflächenform erfolgt dabei so, dass die Dichtlippe eine derartige Verformbarkeit aufweist, dass sie bei Kontaktierung einer Objektoberfläche mit einer bestimmten Oberflächenform eine am Objekt anliegende Dichtfläche ausbildet, die so dicht ist, dass durch Evakuieren des Saugkörpers ein für die Zwecke der Manipulation oder Fixierung ausreichendes Vakuum in den Unterdruckräumen aufgebaut werden kann. Für ebene Objektobeiflächen sind demnach die aus dem Stand der Technik bekannten Ausführungen und Ausformungen von Dichtlippen geeignet. Weiters besitzt eine angepasste Dichtlippe eine so ausreichende Verformbarkeit, dass eine nicht aktive Dichtlippe vom Objekt problemlos so weit verformt werden kann, dass sie die Funktion der anderen aktiven Dichtlippe nicht beeinträchtigt.

Eine Ausbildung des Sauggreifers gemäß Anspruch 2 bewirkt durch die Anschlagflächen eine zumindest in eine Richtung definierte Position des Objekts im Bezug auf den Sauggreifer, wodurch eine Positionierung des Objekts beim Aufnehmen, Ablegen oder Fixieren mit höheren Genauigkeiten durchgeführt werden kann.

Eine Ausbildung des Sauggreifers gemäß Anspruch 3 bewirkt, dass Objekte mit stärkerer Außenkrümmung oder spitzerem Oberflächenwinkel weiter in das Innere des Sauggreifers hineinragen als Objekte mit geringerer Außenkrümmung oder geringerem Oberflächenwinkel bzw. als ebene Objekte, wodurch die der zweiten Objektoberflächenform zugeordnete, innere Dichtlippe sich weiter im Inneren des Sauggreifers befindet und dadurch beim Ansaugen von Objekten mit der ersten Oberflächenform, die weniger gekrümmt ist, auch eine geringere Verformung erfährt.

Eine Weiterbildung des Sauggreifers gemäß Anspruch 4 bewirkt, dass die Anschlagflächen durch das Anschlagelement exakt definiert sind, wodurch die Positioniergenauigkeit des Objekts bezogen auf den Sauggreifer weiter verbessert wird.

Eine Ausbildung des Sauggreifers gemäß Anspruch 5 kann von Vorteil sein, wenn an die Positioniergenauigkeit keine so hohen Ansprüche gestellt werden. Die Verformung der Dichtlippen bei der Ansaugbewegung wird dabei ebenfalls von einem bezüglich des Sauggreifers feststehenden Bauteil begrenzt, die Objektoberfläche wird jedoch lediglich von den Dichtlippen kontaktiert, weshalb die Gefahr von Abdrücken auf der Objektoberfläche reduziert ist.

Die Ausführung eines Sauggreifers gemäß Anspruch 6 ermöglicht die wirtschaftliche Herstellung einer großen Anzahl derartiger Sauggreifer, wobei durch spezielle Formung des Spritzgießwerkzeuges eine Anpassung des Saugkörpers und der Dichtlippen an eine Vielfalt aufzunehmender Objekte einfach möglich ist. Durch die einstückige Ausführung von Saugkörper und Dichtlippen ist das Einströmen von Luft durch Undichtigkeiten zwischen Saugkörper und Dichtlippen gegenüber einer Ausführungsform mit mehreren zusammengesetzten Bauteilen unterbunden und können bei guter Wirkung der Dichtlippen Objekte über längere Zeiträume zuverlässig und mit geringem Vakuumverlust angesaugt werden.

Obwohl das Anschlagelement oder die Anschlagelemente an verschiedenen Positionen am Sauggreifer, also auch außerhalb des Saugkörpers angeordnet sein können, ist eine Ausbildung nach Anspruch 7 von Vorteil, da dies insbesondere für das Ansaugen von ebenen als auch abgewinkelten Oberflächenformen eine einfache Möglichkeit darstellt, die entsprechenden Anschlagflächen bereitzustellen.

Die Ausbildung des Sauggreifers gemäß Anspruch 8 bewirkt eine hohe Verformbarkeit der Dichtlippen, die auch ein vollflächiges und damit dichtes Anliegen am Objekt sicherstellen und dadurch das Ansaugen auf zuverlässige Weise erfolgt. Weiters ist dadurch auch die erforderliche Verformbarkeit gegeben, die eine gegenseitig ungünstige Beeinflussung der Dichtlippen weitgehend verhindert, etwa indem die äußere Dichtlippe beim Ansaugen einer abgewinkelten Objektoberfläche in ausreichendem Maß verdrängt werden kann.

Die Ausführung des Sauggreifers gemäß Anspruch 9 ist besonders für das Aufnehmen von Objekten mit einer prismatischen Obeiflächenform, wie sie etwa bei einem abgewinkelten Werkstück gegeben ist, von Vorteil. Durch die längliche Form ist bei im Vergleich zu kreisrunder Form des Saugkörpers in einer Richtung eine große Abmessung gegeben, während in einer dazu rechtwinkeligen Richtung eine sehr kleine Abmessung des Sauggreifers gegeben ist, was für Anwendungen speziell an Biegemaschinen von Vorteil ist.

Mit einer Ausführung des Sauggreifers gemäß Anspruch 10 wird bewirkt, dass beim abwechselnden Antasten und Ansaugen verschiedener Oberflächenformen, also von beispielsweise ebenen Flächen und abgewinkelten Flächen im Wechsel, sowohl die erste Dichtlippe als auch die zweite Dichtlippe etwa gleich stark den Verformungen ausgesetzt sind und dadurch nicht eine vorzeitige Alterung bzw. Abnutzung etwa der inneren oder äußeren Dichtlippe gegeben ist.

Eine hohe Gebrauchsdauer und Zuverlässigkeit des Ansaugvorganges wird bei einer Ausführung des Sauggreifers gemäß Anspruch 11 bewirkt und kann bei der Herstellung eines derartigen Sauggreifers auf aus dem Stand der Technik bekannte Herstellverfahren zurückgegriffen werden.

Für das Ansaugen von prismatischen, abgewinkelten Objektoberflächen ist eine Ausführung gemäß Anspruch 12 von Vorteil.

Eine Anschlagfläche kann dabei aus der Objektoberflächenform entsprechenden Flächen gebildet sein oder aber auch durch einzelne Anschlagpunkte, die die entsprechenden Anschlagflächen definieren.

Die Ausführung des Sauggreifers nach Anspruch 13 ist von Vorteil, da der äußere Unterdruckraum nur bei ersten Objektoberflächenformen aktiviert werden muss, jedoch von der Unterdruckquelle entkoppelt werden kann, wenn mit dem inneren Unterdruckraum eine zweite Objektoberflächenform angesaugt wird. Dadurch kann eine einzige Unterdruckquelle für beide Unterdruckräume eingesetzt werden.

Die Verwendung eines Sauggreifers gemäß Anspruch 14 an Abkantpressen mit einer Umgreifstation ist wirtschaftlich von Vorteil, da durch die Verwendung eines erfindungsgemäßen Sauggreifers Stillstandzeiten durch das Wechseln der Sauggreifer auf andere Oberflächenformen in vielen Anwendungsfällen entfallen. Gleichzeitig wird durch die Verwendung eines erfindungsgemäßen Sauggreifers ein größeres Spektrum an Teilegeometrien einer Automatisierung mittels eines Handhabungsgeräts zugänglich.

Zum besseren Verständnis der Erfindung wird diese anhand der nachfolgenden Figuren näher erläutert.

Es zeigen jeweils in stark schematisch vereinfachter Darstellung:
- Fig. 1: einen Schnitt durch einen erfindungsgemäßen Sauggreifer beim Ansaugen eines Objekts mit einer ebenen Objektoberflächenform;
- Fig. 2: einen Schnitt durch einen erfindungsgemäßen Sauggreifer beim Ansaugen eines Objekts mit einer abgewinkelten Objektoberflächenform;
- Fig. 3: eine Unteransicht eines erfindungsgemäßen Sauggreifers mit einem Anschlagelement;
- Fig. 4: einen Schnitt durch einen Sauggreifer gemäß Fig. 3 beim Ansaugen eines ebenen Objekts;
- Fig. 5: einen Schnitt durch einen Sauggreifer gemäß Fig. 3 beim Ansaugen eines abgewinkelten Objekts und
- Fig. 6: einen Schnitt durch einen Sauggreifer in einer weiteren Ausführungsform beim Ansaugen eines abgewinkelten Objekts.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

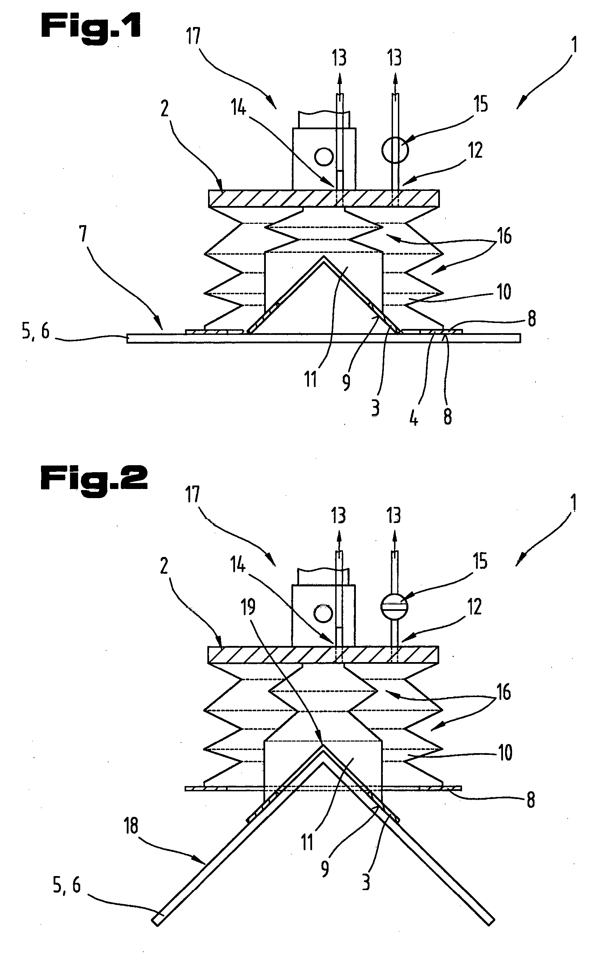

Anhand der Fig. 1 und 2 wird eine erfindungsgemäße Ausführungsform eines Sauggreifers beschrieben.

Fig. 1 zeigt im Schnitt einen Sauggreifer 1, der einen stabilen Saugkörper 2 umfasst, an dem eine erste, innere Dichtlippe 3 angeordnet ist und an dem weiters eine zweite, äußere Dichtlippe 4 angeordnet ist. Die innere Dichtlippe 3 als auch die äußere Dichtlippe 4 sind etwa ringförmig ausgebildet, das heißt in Form einer beliebigen, geschlossenen Kurve, die an ein anzusaugendes Objekt 5 angelegt werden kann und danach durch Absaugen der Luft zwischen dem Saugkörper 2 und dem Objekt 5 ein Unterdruck erzeugt wird, durch den das Objekt 5 in Zusammenwirken mit dem Umgebungsdruck gegen den Sauggreifer 1 gedrückt wird. In Fig. 1 ist das Objekt 5 als ebenes Werkstück 6 dargestellt, das beispielsweise durch ein zu biegendes Blechteil gebildet ist. Das Objekt 5 besitzt dabei eine ebene, erste Objektoberflächenform 7 und ist die zweite, äußere Dichtlippe 4 an diese erste Objektoberflächenform 7 angepasst. Die innere Dichtfläche 8 der inneren Dichtlippe 4 ist daher im unbelasteten Ausgangszustand gegengleich zur anzusaugenden, ersten Objektoberflächenform 7 geformt, das heißt in diesem Ausführungsbeispiel etwa eben. Als Material kommt für die innere Dichtlippe 3 als auch für die äußere Dichtlippe 4 jedes gängige Material in Frage, mit dem herkömmliche Sauggreifer die entsprechenden Dichtflächen ausbilden. Aus Gründen der guten Verformbarkeit und guten Dichtwirkung sind die Dichtlippen 3 und/oder 4 vorzugsweise aus Elastomermaterial, wie beispielsweise Kautschuk, Weich-PVC, Nitril-Butyl-Gummi, Silikon, Chloropren-Kautschuk, Polyurethan, Polyester-Urethan-Kautschuk oder ähnlichen Materialien hergestellt.

Da die innere Dichtlippe 3 mit der inneren Dichtfläche 9 nicht am Objekt 5 anliegt, steht der von der äußeren Dichtlippe 4 begrenzte, äußere Unterdruckraum 10 in Verbindung mit dem von der inneren Dichtlippe 3 begrenzten, inneren Unterdruckraum 11 und sind beim Ansaugen eines Objekts 5 mit der ersten Objektoberflächenform 7, die der äußeren Dichtlippe 4 zugeordnet ist, sowohl der äußere Unterdruckraum 10 als auch der innere Unterdruckraum 11 zu evakuieren. Dies kann erfolgen, indem der äußere Unterdruckraum 10 mit einem ersten Unterdruckanschluss 12 mit einer nicht dargestellten Unterdruckquelle 13 und der innere Unterdruckraum 11 mit einem zweiten Unterdruckanschluss 14 ebenfalls mit der Unterdruckquelle 13 verbunden werden. In einer anderen Ausführungsform eines erfindungsgemäßen Sauggreifers 1 ist es auch möglich, dass lediglich der innere Unterdruckraum 11 über den zweiten Unterdruckanschluss 14 mit der Unterdruckquelle 13 verbindbar ist, auf den ersten Unterdruckanschluss 12 für den äußeren Unterdruckraum 10 jedoch verzichtet werden kann.

Um die Verbindung zwischen dem äußeren Unterdruckraum 10 und der Unterdruckquelle bei Bedarf unterbrechen zu können, ist in der Verbindung ein Ventil 15 das eine Absperrfunktion aufweist, vorgesehen.

Die innere Dichtlippe 3 als auch die äußere Dichtlippe 4 sind wie dargestellt vorteilhaft, zumindest abschnittsweise in Form von Faltenbälgen 16 ausgebildet, die eine gute Verformbarkeit der Dichtlippen 3, 4 bewirken.

Der Faltbalg 16 weist dabei ein oder mehrere Falten auf, die eine kontrollierte Verformung ermöglichen.

Der Sauggreifer 1 ist im dargestellten Ausführungsbeispiel 1 mit einem Kupplungselement 17 versehen, mit dem der Saugkörper 2 beispielsweise mit einem nicht dargestellten Handhabungsgerät, etwa in Form eines Industrieroboters verbindbar ist. Alternativ dazu kann das Kupplungselement 17 so ausgeführt sein, dass der Sauggreifer 1 etwa in einer Einspannvorrichtung zum Fixieren von Objekten eingebaut werden kann. Weiters kann das Kupplungselement 17 so ausgeführt sein, dass es gleichzeitig den zweiten Unterdruckanschluss 14 zur Evakuierung des inneren Unterdruckraums 11 umfasst, und gegebenenfalls auf den ersten Unterdruckanschluss 12 für den äußeren Unterdruckraum 10 verzichtet wird, da dieser aufgrund der bei einem Objekt 5 mit der ersten Objektoberflächenform 7 nicht anliegenden inneren Dichtlippe 3 der äußere Unterdruckraum 10 ohnehin mit dem inneren Unterdruckraum 11 in Verbindung steht und über den zweiten Unterdruckanschluss 14 evakuierbar ist.

Fig. 2 zeigt einen Sauggreifer 1 gemäß Fig. 1, jedoch beim Ansaugen eines Objekts 5 mit einer zweiten Objektoberflächenform 18, die im dargestellten Ausführungsbeispiel von einem abgewinkelten, gebogenen Werkstück 6 gebildet ist. Dazu ist die innere Dichtlippe 3 an diese zweite Objektoberflächenform 18 angepasst, das heißt so geformt, dass bei Annäherung eines Objekts 5 von unten an den Sauggreifer 1 die innere Dichtfläche 9 der inneren Dichtlippe 3 mit der Oberfläche des Objekts 5 in Kontakt kommt und dieses bei Evakuieren des von der inneren Dichtlippe 3 begrenzten, inneren Unterdruckraums 11 vom Sauggreifer 1 angesaugt wird. Die innere Dichtlippe 3 ist beim dargestellten abgewinkelten Objekt 5 in Form eines gebogenen Werkstücks 6 etwa dachförmig ausgebildet, wodurch das Objekt 5 mit der entlang der Kante 19 abgewinkelten, zweiten Objektoberflächenform 18 mit den zwei an die Kante 19 anschließenden, ebenen Flächen vom Sauggreifer 1 angesaugt wird.

Fig. 2 zeigt, dass das angesaugte Objekt 5 mit der zweiten Objektoberflächenform 18 die äußere Dichtlippe 4, die nicht flächig am Objekt 5 anliegt, sondern nur an der Kante 19, nach oben verdrängt, und der äußere Unterdruckraum 10 mit der Umgebungsluft in Verbindung steht. Um die Unterdruckquelle 13 nicht mit einem Vakuumverlust durch den offenen, äußeren Unterdruckraum 10 zu belasten, ist in der Verbindung zwischen dem ersten Unterdruckanschluss 12 des äußeren Unterdruckraums 10 das bereits erwähnte Ventil 15 angeordnet.

Für den Fall einer anderen, zweiten Objektoberflächenform 18 ist die innere Dichtlippe 3 dementsprechend angepasst. So wurde für das Ansaugen von kreiszylindrischen Objekten 5 die innere Dichtlippe 3 abschnittsweise eine kreiszylindrische Form aufweisen, wobei der Krümmungsradius der inneren Dichtlippe 3 dabei zumindest annähernd dem Außenradius des kreiszylindrischen Objekts 5 entspricht.

Die weiteren mit Bezugszeichen versehenen Bauelemente des Sauggreifers 1 sind mit denselben Bezugszeichen wie in Fig. 1 versehen und wird an dieser Stelle auf die Beschreibung dieser Bauelemente verzichtet.

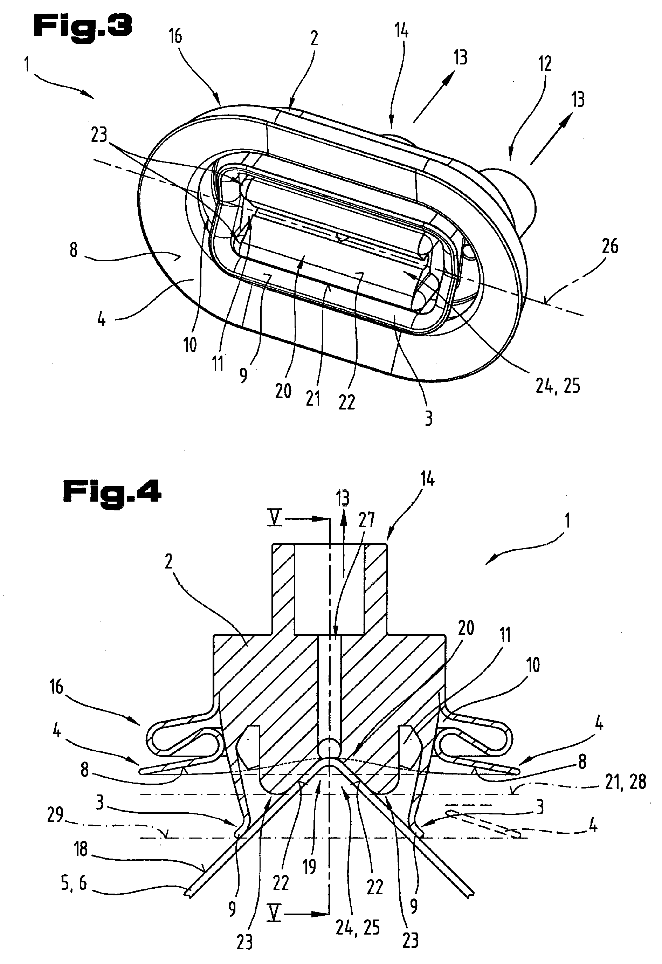

Fig. 3 zeigt eine Ansicht einer weiteren Ausführungsform eines erfindungsgemäßen Sauggreifers 1, bei dem der Saugkörper 2, ähnlich wie in der Ausführung gemäß Fig. 1 und 2, eine innere Dichtlippe 3 sowie eine äußere Dichtlippe 4 umfasst. Im dargestellten Ausführungsbeispiel ist die äußere Dichtlippe 4 an das Ansaugen an eine ebene, erste Objektoberflächenform 7 angepasst und die innere Dichtlippe 3 an eine abgewinkelte, zweite Objektoberflächenform 18 angepasst, wobei in Fig. 3 das Objekt 5 nicht dargestellt ist. Je nachdem, welche Objektoberflächenform das anzusaugende Objekt 5 aufweist, ist entweder die äußere Dichtlippe 4 oder die innere Dichtlippe 3 aktiv und wird durch Evakuieren des äußeren Unterdruckraums 10 und des inneren Unterdruckraums 11 gemeinsam oder durch Evakuieren des inneren Unterdruckraums 11 alleine das Ansaugen eines Objekts 5 bewirkt. Der Unterschied der in Fig. 3 dargestellten Ausführung eines Sauggreifers 1 zu einem Sauggreifer 1 gemäß den Fig. 1 und 2 besteht darin, dass bei einem Sauggreifer 1 gemäß den Fig. 1 und 2 die Annäherung des Objekts 5 an den Sauggreifer 1 durch die bei der Kompression der Dichtlippen 3, 4 wirkende Gegenkraft der Dichtlippen 3, 4 begrenzt wird, bis ein Kräftegleichgewicht zwischen den auf das Objekt 5 wirkenden Luftdrücken und den von den Dichtlippen 3, 4 auf das Objekt 5 ausgeübten federnden Kräften eintritt, während bei einem Sauggreifer 1 gemäß Fig. 3 die Annäherung des Objekts 5 an den Sauggreifer 1 bei der Ansaugbewegung durch ein eigenes Anschlagelement 20 begrenzt wird. Dieses ist in dauerhaft gleich bleibender Position am Saugkörper 2 angeordnet bzw. durch diesen selbst gebildet und weist eine erste Anschlagfläche 21 auf, die der ersten Objektoberflächenform 7 angepasst ist und eine zweite Anschlagfläche 22 auf, die der zweiten Objektoberflächenform 18 angepasst ist. Im dargestellten Ausführungsbeispiel ist die erste Anschlagfläche 21 durch zwei zueinander parallele, abgerundete Anschlagwülste 23 definiert und kontaktiert ein mittels der äußeren Dichtlippe 4 angesaugtes Objekt 5 mit einer ebenen, ersten Objektoberflächenform 7 diese durch die Anschlagwülste 23 definierte Anschlagfläche 21. Das Anschlagelement 20 ist im Inneren des von der inneren Dichtlippe 3 begrenzten, inneren Unterdruckraumes 11 angeordnet und weist zwischen den Anschlagwülsten 23 eine Ausnehmung 24 auf, die etwa einer V-Nut 25 entspricht und die geeignet ist, für ein entlang einer Kante 19 abgewinkeltes Objekt 5 die zweite Anschlagfläche 22 zu definieren. Falls ein Objekt 5 wie in Fig. 2 dargestellt, eine derartige, abgewinkelte Oberfläche aufweist, wird es beim Ansaugen von der Inneren Dichtlippe 3 bis zum Kontaktieren der zweiten Anschlagfläche 22 an den Sauggreifer 1 angenähert. Das in Fig. 3 dargestellte Ausführungsbeispiel des Sauggreifers 1 ist zum Ansaugen von Objekten 5 mit einer ebenen, ersten Objektoberflächenform 7 oder mit einer etwa rechtwinkeligen, zweiten Oberflächenform 18 geeignet, indem die äußere Dichtlippe 4 und die innere Dichtlippe 3 eine dementsprechend angepasste Grundform aufweisen. Der Sauggreifer 1 kann aus den in der Beschreibungseinleitung genannten auch für herkömmliche Sauggreifer eingesetzten Materialien bestehen und insbesondere kann der gesamte Saugkörper 2 sowie der das Anschlagelement 20 und die Dichtlippen 3, 4 einstückig, insbesondere durch ein Spritzgießverfahren hergestellt sein.

Der in Fig. 3 dargestellte Sauggreifer 1 ist länglich ausgeführt, wobei seine Längsachse 26 parallel zur V-Nut 25 ausgerichtet ist.

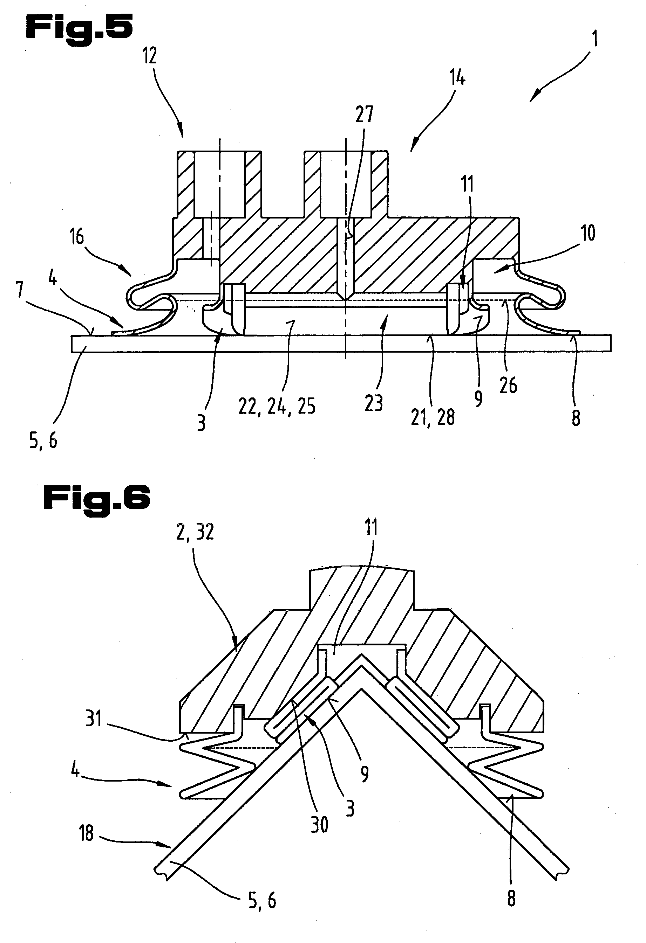

In den Fig. 4 und 5 sind Schnitte durch einen erfindungsgemäßen Sauggreifer 1 gemäß Fig. 3 dargestellt.

Fig. 4 zeigt dabei einen Schnitt durch einen Sauggreifer 1 mit einem Objekt 5 in Form eines um eine Kante 19 abgewinkelten Werkstückes 6, wie es nach Durchführung eines Biegevorganges an einer Biegemaschine vorliegen kann. Das Objekt 5 besitzt eine abgewinkelte, zweite Objektoberflächenform 18, und wird mittels der Inneren Dichtlippe 3 in der Ausnehmung 24, hier in Form der V-Nut 25 zentriert und gegen die abgewinkelte, zweite Anschlagfläche 22 gedrückt. Beim Ansaugen des Objekts 5 besteht ein Unterdruck nur im inneren Unterdruckraum 11, während die äußere Dichtlippe 4 durch das angesaugte, abgewinkelte Objekt im Bereich der Kante 19 nach oben gedrückt wird und der äußere Unterdruckraum 10 mit der Umgebungsluft in Verbindung steht.

Die äußere Dichtlippe 4 entspricht einem eineinhalb-fachen Faltenbalgsauger, während die innere Dichtlippe 3 gewissermaßen als Faltenbalgsauger mit einer halben Falte bezeichnet werden kann.

Der Schnitt zeigt auch den zweiten Unterdruckanschluss 14 über den der innere Unterdruckraum 11 über einen entsprechenden Strömungsweg 27 mit einer nicht dargestellten Unterdruckquelle 13 verbindbar ist.

Die sonstigen mit Bezugszeichen versehenden Bauelemente des Sauggreifers 1 in Fig. 3 und 4 entsprechen im Wesentlichen den mit den gleichen Bezugszeichen versehenen Bauteilen eines Sauggreifers gemäß den Fig. 1 und 2, weshalb diese zur Vermeidung von Wiederholungen an dieser Stelle nicht wiederholt beschrieben werden, sondern auf die entsprechenden Erläuterungen zu den Fig. 1 und 2 verwiesen wird.

Fig. 5 zeigt einen Schnitt durch einen erfindungsgemäßen Sauggreifer 1 entlang der Linie V ― V in Fig. 4, wobei das angesaugte Objekt 5 ein ebenes Werkstück 6 ist und eine ebene, erste Objektoberflächenform 7 aufweist. Objekte 5 mit dieser ersten Objektoberflächenform 7 werden mittels der äußeren Dichtlippe 4 kontaktiert und angesaugt, bis die Objektoberfläche an der ersten Anschlagfläche 21, die durch die Anschlagwülste 23 definiert ist, anliegt. Da die erste Anschlagfläche 21 eben ist, kann diese auch als Anschlagebene 28 bezeichnet werden. Eine derartige Anschlagebene 28 kann alternativ zu den dargestellten Anschlagwülsten 23 auch durch zumindest drei Anschlagpunkte definiert sein oder aber auch durch eine oder mehrere in der Anschlagebene 28 liegende Anschlagflächen.

In Fig. 4 ist noch angedeutet, dass die innere Dichtlippe 3 und die äußere Dichtlippe 4 in unbelastetem Zustand etwa bis zur selben Bezugsebene 29 reichen. Weiters zeigt Fig. 4, dass die zweite Anschlagfläche 22 die erste Anschlagfläche 21 in Richtung des Sauggreifers 1 durchdringt, das heißt ein von der inneren Dichtlippe 3 angesaugtes Objekt 5 mit der zweiten Objektoberflächenform 18 verformt beim Ansaugen die nicht aktive, äußere Dichtlippe 4.

Bezüglich der weiteren in Fig. 5 dargestellten Bauelemente wird auf die entsprechenden Erläuterungen zu den Bauteilen mit denselben Bezugszeichen in den vorhergehenden Figuren verwiesen.

Fig. 6 zeigt eine weitere mögliche Ausführungsform eines erfindungsgemäßen Sauggreifers 1, bei dem die Verformung der inneren Dichtlippe 3 oder der äußeren Dichtlippe 4 von Stützflächen 30 bzw. 31 am Saugkörper 2 oder einem vom Saugkörper 2 verschiedenen Stützkörper 32 begrenzt wird.

Die Ausführungsbeispiele zeigen mögliche Ausführungsvarianten des Sauggreifers 1, wobei bei an dieser Stelle bemerkt sei, dass die Erfindung nicht auf die speziell dargestellten Ausführungsvarianten desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Sauggreifers 1 dieser bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1, 2; 3, 4, 5; 6 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Sauggreifer
- 2: Saugkörper
- 3: innere Dichtlippe
- 4: äußere Dichtlippe
- 5: Objekt

- 6: Werkstück
- 7: erste Objektoberflächenform
- 8: äußere Dichtfläche
- 9: innere Dichtfläche
- 10: äußerer Unterdruckraum

- 11: innerer Unterdruckraum
- 12: erster Unterdruckanschluss
- 13: Unterdruckquelle
- 14: zweiter Unterdruckanschluss
- 15: Ventil

- 16: Faltenbalg
- 17: Kupplungselement
- 18: zweite Objektoberflächenform
- 19: Kante
- 20: Anschlagelement

- 21: erste Anschlagfläche
- 22: zweite Anschlagfläche
- 23: Anschlagwulst
- 24: Ausnehmung
- 25: V-Nut

- 26: Längsachse
- 27: Strömungsweg
- 28: Anschlagebene
- 29: Bezugsebene
- 30: Stützfläche

- 31: Stützfläche

## Patentansprüche

1. Sauggreifer (1) zum Ansaugen von Objekten (5), umfassend einen Saugkörper (2) der eine etwa ringförmige innere Dichtlippe (3) und eine diese außerhalb umgebende und dazu distanzierte etwa ringförmige äußere Dichtlippe (4) aufweist und dadurch ein von der inneren Dichtlippe (3) begrenzter innerer Unterdruckraum (11) und ein von der äuβeren Dichtlippe (4) begrenzter äußerer Unterdruckraum (10) gebildet sind, die beide mit einer Unterdruckquelle (13) verbindbar sind, **dadurch gekennzeichnet, dass** die äußere Dichtlippe (4) des Saugkörpers (2) an eine ebene erste Objektoberflächenform (7) angepasst ist und die innere Dichtlippe (3) an eine entlang einer geraden Kante (19) abgewinkelte zweite Objektoberflächenform (18) angepasst ist.

2. Sauggreifer (1) nach Anspruch 1, **dadurch gekennzeichnet, dass** der Saugkörper (2) zur Begrenzung der Annäherung des Objekts (5) an den Sauggreifer (1) eine der ersten Objektoberflächenform (7) angepasste erste Anschlagfläche (21) und eine der zweiten Objektoberflächenform (18) angepasste zweite Anschlagfläche (22) aufweist.

3. Sauggreifer (1) nach Anspruch 2, **dadurch gekennzeichnet, dass** die zweite Anschlagfläche (22) die erste Anschlagfläche (21) in Richtung des Sauggreifers (1) durchdringt.

4. Sauggreifer (1) nach Anspruch 2 oder 3, **dadurch gekennzeichnet, dass** die erste Anschlagfläche (21) und/oder die zweite Anschlagfläche (22) an einem bezüglich des Sauggreifers (1) feststehenden Anschlagelement (20) ausgebildet sind.

5. Sauggreifer (1) nach Anspruch 2 oder 3, **dadurch gekennzeichnet, dass** die erste Anschlagfläche (21) und/oder die zweite Anschlagfläche (22) durch eine aktive, komprimierte Dichtlippe (3, 4) gebildet ist, deren Bewegung von Stützflächen (30, 31) am Saugkörper (2) oder durch eine Stützkörper (32) begrenzt wird.

6. Sauggreifer (1) nach einem der Ansprüche 1 bis 5, **dadurch gekennzeichnet, dass** der Saugkörper (2) und die Dichtlippen (3, 4) durch einen Spritzgießvorgang hergestellt und einstückig miteinander verbunden sind.

7. Sauggreifer (1) nach Anspruch 4, **dadurch gekennzeichnet, dass** das Anschlagelement (20) innerhalb des inneren Unterdruckraumes (11) angeordnet ist.

8. Sauggreifer (1) nach einem der Ansprüche 1 bis 7, **dadurch gekennzeichnet, dass** eine oder mehrere Dichtlippen (3, 4, ...) zumindest abschnittsweise als Faltenbalg (15) ausgebildet sind.

9. Sauggreifer (1) nach einem der Ansprüche 1 bis 8, **dadurch gekennzeichnet, dass** der Saugkörper (2) eine längliche Form aufweist und die ringförmigen Dichtlippen (3, 4) aus der Richtung des Objekts (5) betrachtet eine rechteckige oder ovale Form mit einer zur des Saugkörpers (2) parallelen Längsachse (26) aufweisen.

10. Sauggreifer (1) nach einem der Ansprüche 1 bis 9, **dadurch gekennzeichnet, dass** die Dichtlippen (3, 4) im unbelasteten Zustand etwa bis zur selben Bezugsebene (29) ragen.

11. Sauggreifer (1) nach einem der Ansprüche 4 bis 10, **dadurch gekennzeichnet, dass** das Anschlagelement (20) und die Dichtlippen (3, 4) einstückig aus Elastomermaterial, insbesondere ausgewählt aus einer Gruppe umfassend Kautschuk, Weich-PVC, Nitril-Butyl-Gummi, Silikon, Chloropren-Kautschuk, Polyurethan, Polyester-Urethan-Kautschuk gebildet sind.

12. Sauggreifer (1) nach einem der Ansprüche 7 bis 11, **dadurch gekennzeichnet, dass** das Anschlagelement (20) zumindest abschnittsweise eine die zweite Anschlagfläche (22) bildende zylindrische oder prismatische Ausnehmung (24) mit einer zu den Erzeugenden der zweiten Objektoberflächenform (18) parallelen Längsachse besitzt, insbesondere die Form oder zumindest die Wirkung einer V-Nut (25) aufweist.

13. Sauggreifer (1) nach einem der Ansprüche 7 bis 11, **dadurch gekennzeichnet, dass** die Verbindung des äußeren Unterdruckraums (10) zur Unterdruckquelle (13) mittels eines Ventils (15) absperrbar ist.

14. Verwendung eines Sauggreifers (1) nach Anspruch 1 bis 13 an einem Handhabungsgerät, insbesondere an einem Industrieroboter, zur Handhabung von Werkstücken an einer Abkantpresse mit einer Umgreifstation.

## Claims

1. Suction gripper (1) for suctioning of objects (5), comprising a suction body (2) having an approximately annularly shaped inner sealing lip (3) and an approximately annularly shaped outer sealing lip (4) surrounding the latter at the outside and being arranged at a distance thereto, and thereby an underpressure chamber (11) limited by the inner sealing lip (3) and an underpressure chamber (10) limited by the outer sealing lip (4) is formed, which may both be connected by means of an underpressure source (13), **characterized in that** the outer sealing lip (4) of the suction body (2) is adapted to a planar first object surface shape (7), and the inner sealing lip (3) is adapted to a second object surface shape (18) which is angled along a straight edge (19).

2. Suction gripper (1) according to claim 1, **characterized in that** for restricting the approximation of the object (5) to the suction gripper (1), the suction body (2) has a first stop surface (21) which is adapted to the first object surface shape (7) and a second stop surface (22) which is adapted to a second object surface shape (18).

3. Suction gripper (1) according to claim 2, **characterized in that** the second stop surface (22) penetrates the first stop surface (21) in the direction of the suction gripper (1).

4. Suction gripper (1) according to claim 2 or 3, **characterized in that** the first stop surface (21) and/or the second stop surface (22) are designed at a stop element (20) which is fixed relative to the suction gripper (1).

5. Suction gripper (1) according to claim 2 or 3, **characterized in that** the first stop surface (21) and/or the second stop surface (22) is formed from an active, compressed sealing lip (3, 4) the movement of which is restricted by support faces (30, 31) at the suction body (2) or by a support body (32).

6. Suction gripper (1) according to one of claims 1 to 5, **characterized in that** the suction body (2) and the sealing lips (3, 4) are produced by way of an injection molding process and integrally connected with one another.

7. Suction gripper (1) according to claim 4, **characterized in that** the stop element (20) is arranged inside the inner underpressure chamber (11).

8. Suction gripper (1) according to one of claims 1 to 7, **characterized in that** at least sections of one or several sealing lips (3, 4, ...) are embodied as bellows (15).

9. Suction gripper (1) according to one of claims 1 to 8, **characterized in that** the suction body (2) has an oblong shape and the annularly shaped sealing lips (3, 4) have - as seen from the direction of the object (5) - an rectangular or oval shape with a longitudinal axis (26) running parallel to the suction body (2).

10. Suction gripper (9) according to one of claims 1 to 9, **characterized in that** the sealing lips (3, 4) protrude to approximately the same reference plane (29) when they are in an unloaded state.

11. Suction gripper (1) according to one of claims 4 to 10, **characterized in that** the stop element (20) and the sealing lips (3, 4) are embodied to be one piece of elastomer material, in particular selected from a group comprising rubber, soft PVC, nitrile-butyl rubber, silicone, chloroprene rubber, polyurethane, polyester-urethane rubber.

12. Suction gripper (1) according to one of claims 7 to 11, **characterized in that** at least sections of the stop element (20) have a cylindrical or prismatic recess (24) forming the second stop surface (22) said recess having a longitudinal axis which is parallel to generatrices creating the second objective surface shape (18), in particular having the shape or at least the effect of a V-groove (25).

13. Suction gripper (1) according to one of claims 7 to 11, **characterized in that** the connection of the outer underpressure chamber (10) with the underpressure source (13) can be closed by means of a valve (15).

14. Usage of a suction gripper (1) according to claim 1 to 13 with a handling device, in particular an industrial robot, for handling workpieces at a press brake having a regrip station.

## Revendications

1. Pince aspirante (1) permettant de saisir des objets (5), comportant un corps ventouse (2) qui comporte une lèvre d'étanchéité intérieure (3) sensiblement annulaire et une lèvre d'étanchéité extérieure (4) sensiblement annulaire, entourant celle-ci à l'extérieur et située à distance de celle-ci, et ainsi sont formées une chambre de dépression intérieure (11) délimitée par la lèvre d'étanchéité intérieure (3) et une chambre de dépression extérieure (10) délimitée par la lèvre d'étanchéité extérieure (4), lesdites deux chambres de dépression pouvant être reliées à une source de dépression (13), **caractérisée en ce que** la lèvre d'étanchéité extérieure (4) du corps ventouse (2) est ajustée à une première forme de surface (7) plane d'un objet et la lèvre d'étanchéité intérieure (3) est ajustée à une deuxième forme de surface (18) d'un objet, pliée le long d'un bord (19) droit.

2. Pince aspirante (1) selon la revendication 1, **caractérisée en ce que** le corps ventouse (2), pour limiter l'approche de l'objet (5) contre la pince aspirante (1), comporte une première surface de butée (21), ajustée à la première forme de surface (7) de l'objet, et une deuxième surface de butée (22) ajustée à la deuxième forme de surface (18) de l'objet.

3. Pince aspirante (1) selon la revendication 2, **caractérisée en ce que** la deuxième surface de butée (22) traverse la première surface de butée (21) vers la pince aspirante (1).

4. Pince aspirante (1) selon la revendication 2 ou 3, **caractérisée en ce que** la première surface de butée (21) et/ou la deuxième surface de butée (22) sont réalisées sur un élément de butée (20) fixe par rapport à la pince aspirante (1).

5. Pince aspirante (1) selon la revendication 2 ou 3, **caractérisée en ce que** la première surface de butée (21) et/ou la deuxième surface de butée (22) sont formées par une lèvre d'étanchéité (3, 4) comprimée active dont le mouvement est limité par des surfaces d'appui (30, 31) sur le corps ventouse (2) ou par un corps d'appui (32).

6. Pince aspirante (1) selon l'une quelconque des revendications 1 à 5, **caractérisée en ce que** le corps ventouse (2) et les lèvres d'étanchéité (3, 4) sont réalisés par un processus de moulage par injection et sont reliés entre eux d'un seul tenant.

7. Pince aspirante (1) selon la revendication 4, **caractérisée en ce que** l'élément de butée (20) est disposé à l'intérieur de la chambre de dépression intérieure (11).

8. Pince aspirante (1) selon l'une quelconque des revendications 1 à 7, **caractérisée en ce qu'**une ou plusieurs lèvres d'étanchéité (3, 4, ... ) sont réalisées au moins par zones en forme de soufflet (15).

9. Pince aspirante (1) selon l'une quelconque des revendications 1 à 8, **caractérisée en ce que** le corps ventouse (2) a une forme allongée et les lèvres d'étanchéité (3, 4) annulaires, considérées dans la direction à partir de l'objet (5), ont une forme rectangulaire ou ovale avec un axe longitudinal (26) parallèle au corps ventouse (2).

10. Pince aspirante (1) selon l'une quelconque des revendications 1 à 9, **caractérisée en ce que** les lèvres d'étanchéité (3, 4), à l'état non sollicité, s'avancent sensiblement jusqu'au même plan de référence (29).

11. Pince aspirante (1) selon l'une quelconque des revendications 4 à 10, **caractérisée en ce que** l'élément de butée (20) et les lèvres d'étanchéité (3, 4) sont réalisées d'un seul tenant dans un matériau élastomère, choisi en particulier dans un groupe contenant le caoutchouc, le PVC souple, le caoutchouc nitrile-butyle, la silicone, le caoutchouc chloroprène, le polyuréthanne, le caoutchouc de polyétheruréthanne.

12. Pince aspirante (1) selon l'une quelconque des revendications 7 à 11, **caractérisée en ce que** l'élément de butée (20) possède au moins par zones un évidement (24) cylindrique ou prismatique formant la deuxième surface de butée (22), avec un axe longitudinal parallèle aux génératrices de la deuxième forme de surface (18) d'un objet, comporte en particulier la forme ou au moins l'action d'une rainure en V (25).

13. Pince aspirante (1) selon l'une quelconque des revendications 7 à 11, **caractérisée en ce que** la liaison de la chambre de dépression extérieure (10) avec la source de dépression (13) peut être fermée par une vanne (15).

14. Utilisation d'une pince aspirante (1) selon l'une quelconque des revendications 1 à 13 sur un appareil de manipulation, en particulier sur un robot industriel, pour manipuler des pièces sur une presse plieuse avec un poste de préhension.
